# EUROPÄISCHE PATENTSCHRIFT

(11) **EP 3 429 723 B1**
(45) Veröffentlichungstag und Bekanntmachung des Hinweises auf die Patenterteilung: **15.07.2020**
(21) Anmeldenummer: 17712067.2
(22) Anmeldetag: 15.03.2017
(51) Int. Cl.: B01D 39/16, A47L 9/14

(54) **STAUBSAUGERFILTERBEUTEL MIT RECYCLIERTEN TEXTILMATERIALIEN UND/ODER BAUMWOLLLINTERS**
VACUUM CLEANER FILTER BAG CONTAINING RECYCLED TEXTILE MATERIALS AND/OR COTTON LINTERS
SAC D'ASPIRATEUR EN MATERIAUX TEXTILES RECYCLES ET/OU DE LINTERS DE COTON

(30) Priorität: 17.03.2016 EP 16160921; 17.03.2016 EP 16160922; 11.07.2016 EP 16178839; 11.07.2016 EP 16178856; 06.10.2016 EP 16192651; 06.10.2016 EP 16192650
(43) Veröffentlichungstag der Anmeldung: 23.01.2019
(60) Teilanmeldung: 20154822.9
(73) Patentinhaber: Eurofilters N.V., 3900 Overpelt (BE)
(72) Erfinder: SCHULTINK, Jan, 3900 Overpelt (BE); SAUER, Ralf, 3900 Overpelt (BE)
(74) Vertreter: Pfenning, Meinig & Partner mbB
(86) Internationale Anmeldenummer: PCT/EP2017/056127
(87) Internationale Veröffentlichungsnummer: WO 2017/158025

(56) Entgegenhaltungen:
- EP-A1- 2 161 374
- EP-A2- 0 960 645
- WO-A1-2011/057641
- DE-A1-102013 014 920
- DE-U1-202008 016 836
- US-A1- 2009 223 190
- US-A1- 2011 030 557

## Beschreibung

Die vorliegende Erfindung betrifft Staubsaugerfilterbeutel aus Abfallprodukten der Textilindustrie. Zudem werden Verwendungsmöglichkeiten von Abfallprodukten der Textilindustrie für Staubsaugerfilterbeutel angegeben.

Filterbeutel aus Vliesstoffen haben Papierfilterbeutel in den letzten 10 Jahren wegen der erheblich besseren Gebrauchseigenschaften praktisch vollständig verdrängt. Insbesondere die Abscheideleistung, die Verstopfungsneigung und die mechanische Festigkeit wurden kontinuierlich verbessert. Die hierfür verwendeten Vliesstoffe sind dabei in der Regel aus thermoplastischen Kunststoffen, insbesondere Polypropylen (PP) und/oder Polyester (PET) gebildet.

Auch wenn noch weiter Bedarf an Verbesserung dieser Eigenschaften besteht, ist trotzdem schon zu spüren, dass die hohen Kosten für die aufwendigen Filterkonstruktionen immer weniger Akzeptanz beim Endkunden finden.

Außerdem wird die Verwendung hochwertiger und schwerer Vliesstoffe für ein Wegwerfprodukt aus ökologischen Gründen immer kritischer gesehen.

Biologisch abbaubare Filterbeutel wie sie in der EP 2 301 404 und der WO 2011/047764 vorgeschlagen werden, scheinen auch kein erfolgversprechender Ansatz zur Verbesserung der ökologischen Eigenschaften zu sein, da Filterbeutel oft über die Müllverbrennung entsorgt werden und eine Kompostierung alleine schon wegen des vornehmlich nicht biologisch abbaubaren Sauggutes nicht in Frage kommt.

Vliesstoff-Filterbeutel für Staubsauger bestehen heute immer aus mehreren Lagen (EP 1 198 280, EP 2 433 695, EP 1 254 693). Zum Einsatz kommen Stützlagen, um die notwendige mechanische Festigkeit zu erreichen, Grobfilterlagen, die eine hohe Speicherkapazität für Staub aufweisen, ohne dass sich der Luftwiderstand zu stark erhöht und Feinfilterlagen zur Filtration von Partikeln < 1 µm.

Zur Erhöhung der Staubspeicherfähigkeit werden seit einigen Jahren zusätzlich Diffusoren und Trennwände in Filterbeuteln eingesetzt, die die Strömungsverhältnisse im Filterbeutel optimieren sollen, um so die Standzeit zu erhöhen.

Zur Fertigung dieser unterschiedlichen Materialien kommen verschiedenste Technologien zum Einsatz. Als Feinfilterlage werden meist Meltblown Mikrofaservliesstoffe verwendet. Diese Meltblownvliesstoffe sind Extrusionsvliesstoffe, bestehen meist aus Polypropylen und weisen Filamentdurchmesser im Bereich von unter 1 µm bis zu wenigen µm auf. Um hohe Abscheideleistung zu erreichen, werden diese Materialien elektrostatisch aufgeladen (z. B. mittels Coronaentladung). Zur weiteren Verbesserung der Abscheideleistung wurde vorgeschlagen, im Elektrospinnverfahren hergestellte Nanofasern auf Vliesstoffträgermaterialien aufzubringen (DE 199 19 809).

Für die Kapazitätslage kommen sowohl kardierte Stapelfaservliesstoffe, Extrusionsvliesstoffe, aber auch Faservliese (EP 1 795 247) aus Stapelfasern oder Filamenten zum Einsatz. Als Materialien für Kapazitätslagen werden meist Polypropylen oder Polyester, aber auch Fluff Pulp (EP 0 960 645, EP 1 198 280) verwendet.

Der Einsatz recycelter Kunststoffe (z. B. recyceltes Polyethylenterephthalat (rPET)) für Gewebe wurde in der WO 2013/106392 vorgeschlagen.

Die Verwendung von rPET als Rohstoff für Meltblown-Vliesstoffe wurde bereits untersucht (Handbook of Nonwovens, Woodhead Publishing Ltd., Ed. by S.J. Russelt, Kapitel 4.10.1).

Die CN101747596 beschreibt die Verwendung von recyclierten PET bzw. recyclierten PBT (rPET/rPBT) als Material für Microfilamente.

Das Filtermaterial eines Staubsaugerfilterbeutels gemäß US 2009/223190 A1 umfasst ein poröses Substrat, das recyclierte Fasern aus der Herstellung von Textilien beinhaltet. Weiter vorhandene Filterlagen sind dabei nicht aus recyclierten Fasern gebildet, sondern beispielweise aus Polypropylene-Meltblown bzw. Polymilchsäure. Für den Fall, dass der Staubsaugerfilterbeutel gemäß US 2009/223190 A1 ein mehrlagig ausgebildetes Filtermaterial umfasst, weist dies somit lediglich das oben beschriebene poröse Substrat auf, das als Stützlage aufgefasst werden kann.

Ausgehend hiervon ist es somit Aufgabe der vorliegenden Erfindung, Staubsaugerfilterbeutel anzugeben, die den auf den Markt befindlichen Staubsaugerfilterbeuteln in den Punkten Staubabscheideleistung und Standzeit in Nichts nachstehen und somit hervorragende Gebrauchseigenschaften aufweisen, jedoch vorwiegend aus wiederverwerteten Materialien oder aus Abfallmaterialien bestehen. Insbesondere ist es daher Aufgabe der vorliegenden Erfindung, ökologisch wie auch ökonomisch besonders vorteilhafte Staubsaugerfilterbeutel zu realisieren. Es soll vorzugsweise ein Anteil an wiederverwerteten Materialien im Filterbeutel von mindestens 40% realisiert werden.

Diese Aufgabe wird gelöst mit einem Staubsaugerfilterbeutel gemäß Patentanspruch 1. Die abhängigen Patentansprüche stellen dabei vorteilhafte Weiterbildungen dar.

Die vorliegende Erfindung betrifft somit einen Staubsaugerfilterbeutel, der eine einen Innenraum umschließende Wandung aus einem luftdurchlässigen Material umfasst. In das luftdurchlässige Material ist eine Einlassöffnung eingebracht. Der erfindungsgemäße Staubsaugerfilterbeutel zeichnet sich dadurch aus, dass das luftdurchlässige Material mindestens eine Lage eines Vliesstoffes umfasst, der staub und/oder faserförmiges recycliertes Material aus der Herstellung von Textilien, insbesondere Baumwolltextilien und/oder Baumwolllinters umfasst.

Das faser- und/oder staubförmige recyclierte Material aus der Herstellung von Textilien fällt insbesondere bei der Prozessierung von Textilmaterialien, wie beispielsweise der Herstellung, dem Schneiden, dem Trocknen oder dem Recyceln von Textilmaterialien an. Als recyclierte Materialien können dabei insbesondere sowohl pre- als auch post-consumer-Textil-Abfallmaterialien eingesetzt werden.

Beispielsweise können für die Herstellung der faser- und/oder staubförmige recyclierte Materialien recyclierte Textilmaterialien (die beispielsweise bei der Herstellung von Textilien als Schnittabfälle anfallen) verwendet werden. Das faser- und/oder staubförmige recyclierte Material kann beispielsweise durch Auflösen des textilen Faserverbandes aus den Textilmaterialine gewonnen werden. Vorzugsweise erfolgt das Auflösen des Faserverbandes durch Reißen oder mittels einer Hammermühle. Hierbei wird der Faserverband bis hin zur Einzelfaser aufgelöst. Dieses Material, d.h. das faser- und/oder staubförmige recyclierte Material, wird auch als "Reißfaser" bezeichnet und kann für die Zwecke der vorliegenden Erfindung beispielsweise in einem Vlieslegeverfahren (insbesondere mittels eines Airlaidverfahrens oder eines Kreuzlegeverfahrens (cross-lapping)) zu einem Faservlies gelegt und ggf. zu einem Vliesstoff gebunden werden und als Materiallage für einen Staubsaugerfilterbeutel eingesetzt werden. Derartige Reißfasern weisen für die Zwecke der vorliegenden Erfindung ein äußerst positives Eigenschaftsbild auf. Ihre bei der Herstellung erfahrene mechanische Beanspruchung führt zu einem breiten Faserlängenspektrum mit auch sehr kurzen Fasern. Hierdurch resultiert eine große Oberfläche und dadurch bedingt ein sehr großes Staubspeichervermögen. Außerdem sind nicht vollständig aufgelöste Faden- und Flächenstücke vorhanden, die in dieser Form zu einer speziellen und vorteilhaften Matrixbildung führen.

Derartige Reißfasern stellen somit insbesondere Textilfasern aus Baumwolle, Polyester, Elastan, Flachs, Leinen, Hanf, Kamelhaar, Lama, Mohair, Polyamid, Polyethylen, Ramie, Seide, Viskose, Jute, Kokos, Modal, Polyakryl, Polypropylen, Schafwolle, Sisal, Ziegenhaar sowie Baumwollstaub sowie Mischungen und Kombinationen hiervon dar.

Weitere mögliche faser- und/oder staubförmigen Materialien für die Zwecke der vorliegenden Erfindung eignen sich beispielsweise Abfallmaterialien an, die sich auf den zur Verarbeitung der Textilien verwendeten Maschinen oder Filtermaterialien absetzen können. Die Stäube bzw. Fasern werden normalerweise entsorgt und thermisch verwertet.

Baumwolllinters sind kurze Baumwollfasern, die am Baumwollsamenkern anhaften, nachdem das lange Samenhaar (Baumwolle) vom Kern entfernt worden ist. Baumwolllinters sind in der Faserlänge (1 bis 6 mm) und im Reinheitsgrad stark verschieden, nicht spinnbar und stellen in der Textilindustrie normalerweise einen nicht verwertbaren Reststoff und somit ein Abfallprodukt dar. Auch Baumwolllinters können für die Vliesstoffe, die in luftdurchlässigen Materialien für die erfindungsgemäßen Staubsaugerfilterbeutel eingesetzt werden können, verwendet werden.

In der Vliesstofflage bzw. Faservlieslage, die im luftdurchlässigen Material enthalten ist, ist das faser- und/oder staubförmige recyclierte Material bzw. sind die Baumwolllinters gebunden bzw. ungebunden. Das Vliesstoffmaterial hat im Gegensatz zu einem Faservlies einen Bindeschritt durchlaufen. Die Bindung des faser- und/oder staubförmigen recyclierten Materials und/oder der Baumwolllinters erfolgt dabei bevorzugt darüber, dass der Vliesstofflage Bindefasern zugesetzt sind, die beispielsweise thermisch aktiviert werden können.

Die Herstellung einer entsprechenden Vliesstofflage kann somit dadurch erfolgen, dass beispielsweise das faser- und/oder staubförmige recyclierte Material und/oder die Baumwolllinters zusammen mit den Bindefasern in einem Kreuzlege- oder einem Airlaid-Prozess abgelegt werden und anschließend - sofern aus dem erzeugten Faservlies ein Vliesstoff erzeugt werden soll - eine Bindung zum fertigen Vliesstoff durch thermische Aktivierung der Bindefasern erfolgt.

In einer bevorzugten Ausführungsform ist vorgesehen, dass die mindestens eine faser- und/oder staubförmiges recycliertes Material und/oder Baumwollinters umfassende Lage des Vliesstoffes bis zu 95 Gew.-%, bevorzugt 70 bis 90 Gew.-% des faser- und/oder staubförmigen recyclierten Materials und/oder Baumwollinters und mindestens 5 Gew.-%, bevorzugt 10 bis 30 Gew.-% an Bindefasern, insbesondere Bikomponentenfasern umfasst oder hieraus besteht.

Die Bindefasern können dabei z.B. sogenannte "Fusing Fibers" darstellen, die aus thermoplastischen, schmelzbaren Materialien gebildet sind. Diese Fusing Fibers schmelzen bei der thermischen Aktivierung auf und binden den faser- und/oder staubförmige recyclierte Material bzw. die Baumwolllinters.

Weiter vorteilhaft ist hierbei, dass die bevorzugt als Bindefasern eingesetzten Bikomponentenfasern aus einem Kern, bestehend aus einem ersten thermoplastischen Material und einem Mantel, bestehend aus einem verglichen mit dem ersten thermoplastischen Material bei geringeren Temperaturen schmelzenden zweiten thermoplastischen Material, bestehen, wobei bevorzugt der Kern oder sowohl Kern als auch Mantel aus einem recyclierten Kunststoff oder mehreren recyclierten Kunststoffen besteht. In einer besonders bevorzugten Ausführungsform ist der Kern der zuvor angesprochenen Kern-Mantel-Bikomponentenfasern dabei aus einem Kunststoff-Recyclat gebildet, während der Mantel aus einem frischen Kunststoff (virgin-Kunststoff) oder ebenso aus einem Kunststoff-Recyclat gebildet ist. Beispielsweise kann der Kern einer derartigen Bikomponentenfaser aus recycliertem PET gebildet sein, während der Mantel aus frischem PP gebildet ist. Neben Kern/Mantel Bikomponentenfasern kommen auch die anderen gebräuchlichen Varianten von Bikomponentenfasern (z. B. Side by Side) in Frage.

Die bevorzugt als Bindefasern eingesetzten Fusing Fibers oder Bikomponentenfasern können dabei teilweise oder vollständig aus recyclierten Kunststoffen bestehen.

Ein entsprechender Vliesstoff, der durch Binden von faser- und/oder staubförmigen recyclierten Materialien aus der Herstellung von Textilien und Bikomponentenfasern erzeugt wird, eignet sich insbesondere als Kapazitätslage in einem erfindungsgemäßen Staubsaugerfilterbeutel. Einem derartigen Vliesstoff können noch zusätzliche Komponenten, wie beispielsweise Mikrostapelfasern, Crimp-Stapelfasern, Fasern mit nicht-runden Querschnittem, Spinnabfällen etc. zugesetzt werden.

In einer bevorzugten Ausführungsform sind die Bindefasern Stapelfasern, insbesondere mit einer Länge von 1 bis 75 mm, bevorzugt 2 bis 25 mm.

Für die Zwecke der vorliegenden Erfindung kann beispielsweise ein Vliesstoff verwendet werden, wie er in der WO 2011/057651 A1 beschrieben ist. Sämtliche Ausführungsformen dieser Patentanmeldung werden für die Zwecke der vorliegenden Erfindung mit übernommen.

In einer weiter bevorzugten Ausführungsform ist das luftdurchlässige Material mehrlagig aufgebaut, wobei das luftdurchlässige Material zusätzlich zur mindestens einen Lage des Vliesstoffes, der faser- und/oder staubförmiges recycliertes Material und/oder Baumwolllinters umfasst, mindestens eine weitere Lage aufweist, die einen Vliesstoff und/oder ein Faservlies umfasst oder hieraus gebildet, wobei insbesondere mindestens eine, mehrere oder sämtliche der zusätzlichen Lagen einem oder mehrere recyclierte Kunststoffe umfassen oder hieraus gebildet sind.

Der für die Zwecke der vorliegenden Erfindung verwendete Begriff "recyclierter Kunststoff" ist dabei synonym zu verstehen zu Kunststoff-Recyclaten. Zur begrifflichen Definition wird hierbei auf die Norm DIN EN 15347:2007 verwiesen.

Mindestens eine dieser Lagen ist somit bevorzugt ein Vliesstoff bzw. ein Faservlies, das recyclierte Kunststoffe umfasst und insbesondere aus recyclierten Kunststoffen gebildet ist. Im Unterschied zum aus dem Stand der Technik bekannten Staubsaugerfilterbeuteln wird somit weniger oder gar kein frisches (virgin) Kunststoffmaterial zur Herstellung der der Wandung des Staubsaugerfilterbeutels zugrundeliegenden Vliesstoffen bzw. Faservliesen verwendet, sondern es gelangen überwiegend oder ausschließlich Kunststoffe zum Einsatz, die bereits in Verwendung waren und durch entsprechende Recycling-Verfahren wiedergewonnen wurden. Derartige Filterbeutel sind in ökologischer Hinsicht deutlich vorteilhaft, da sie in hohem Maße rohstoffneutral hergestellt werden können. Diese Filterbeutel bieten ebenso ökonomische Vorteile, da die meisten recyclierten Kunststoffmaterialien deutlich günstiger bezogen werden können, als die entsprechenden Rohstoffe, die nicht recycliert sind ("virgin" Kunststoffe).

Im Sinne der vorliegenden Erfindung bezeichnet ein Vliesstoff dabei ein Wirrgelege, das einen Verfestigungsschritt durchlaufen hat, so dass es eine ausreichende Festigkeit aufweist, um zum Beispiel zu Rollen auf- bzw. abgewickelt zu werden. Ein Faservlies entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel zu Rollen auf- bzw. abgewickelt zu werden. Bezüglich der Definition dieser Terminologie wird auf die EP 1 795 427 A1 verwiesen.

Gemäß einer bevorzugten Ausführungsform sind die Fasern des Vliesstoffs bzw. des Faservlieses, das im luftdurchlässigen Material der Wandung des erfindungsgemäßen Staubsaugerfilterbeutels beinhaltet ist, aus einem einzigen recyclierten Kunststoffmaterial gebildet.

Alternativ ist es jedoch ebenso bevorzugt, wenn die Fasern des Vliesstoffes bzw. des Faservlieses aus unterschiedlichen Materialien gebildet sind, von denen zumindest eines einen recyclierten Kunststoff darstellt. Hierbei sind insbesondere zwei Ausführungsformen denkbar:
Einerseits kann es sich um ein Gemisch mindestens zweier Fasertypen handeln, beispielsweise um Fasergemische, die aus zumindest zwei unterschiedlichen recyclierten Kunststoffen gebildet sind.

Andererseits ist es ebenso möglich, dass das Faservlies bzw. der Vliesstoff Bikomponentenfasern (BiKo-Fasern) beinhaltet oder hieraus gebildet ist, die aus einem Kern, sowie einem den Kern umhüllenden Mantel bestehen. Kern und Mantel sind dabei aus unterschiedlichen Materialien gebildet. Die Bikomponentenfasern können als Stapelfasern vorliegen oder als Extrusionsvliesstoff (beispielsweise aus Meltblownvliesstoff) ausgebildet sein, so dass die Bikomponentenfasern theoretisch unendliche Länge aufweisen und sogenannte Filamente darstellen. Bei derartigen Bikomponentenfasern ist es von Vorteil, wenn zumindest der Kern aus einem recyclierten Kunststoff gebildet ist, für den Mantel kann beispielsweise auch ein Virgin-Kunststoff, aber alternativ ebenso ein anderer recyclierter Kunststoff eingesetzt werden.

Für die Vliesstoffe bzw. Faservliese für die Zwecke der vorliegenden Erfindung ist es möglich, dass es sich hierbei um trockengelegte, nassgelegte oder Extrusionsvliesstoffe handelt. Demzufolge können die Fasern der Vliesstoffe bzw. Faservliese endliche Länge aufweisen (Stapelfasern), aber auch theoretisch unendliche Länge aufweisen (Filamente).

Insgesamt kann der Aufbau der Wandung des Filterbeutels gemäß der vorliegenden Erfindung ebenso ausgestaltet sein, wie in der EP 1 795 247 beschrieben. Eine derartige Wandung umfasst somit mindestens drei Lagen, wobei mindestens zwei Lagen aus mindestens einer Vliesstofflage und mindestens einer Faservlieslage, enthaltend Stapelfasern und/oder Filamente bestehen. Die Wandung des Staubsaugerfilterbeutels zeichnet sich demnach zusätzlich durch eine Schweißverbindung aus, bei der sämtliche Lagen des Filtermaterials durch Schweißverbindungen miteinander verbunden sind. Der Pressflächenanteil des Schweißmusters beträgt dabei maximal 5 % der Oberfläche der durchströmbaren Fläche des Filtermaterials bzw. Staubsaugerfilterbeutels. Bezogen auf die gesamte durchströmbare Fläche des Filterbeutels liegen durchschnittlich maximal 19 Schweißverbindungen pro 10 cm² vor.

Beispielsweise kann das luftdurchlässige Material in einer Weise ausgestaltet sein, wie es im einleitenden Teil der vorliegenden Patentanmeldung beschrieben ist, also z.B. wie in EP 1 198 280, EP 2 433 695, EP 1 254 693, DE 199 19 809, EP 1 795 247, WO 2013/106 392 oder CN 101747596 beschrieben, solange faser- und/oder staubförmiges recycliertes Material aus der Herstellung von Textilien und/oder Baumwolllinters für die Herstellung dieser Filtermaterialien verwendet wurde. Bezüglich des detaillierten Aufbaus dieser Filtermaterialien wird auf den Offenbarungsgehalt dieser Druckschriften verwiesen.

Die vorliegende Erfindung erfasst mehrere besonders bevorzugte Möglichkeiten der mehrlagigen Ausgestaltung des luftdurchlässigen Materials, die nachfolgend vorgestellt werden. Die Mehrzahl dieser Lagen kann mittels Schweißverbindungen, insbesondere wie in der EP 1 795 427 A1 beschrieben, miteinander verbunden sein. Die Lagen können untereinander auch verklebt oder wie in WO 01/003802 beschrieben gebondet sein.

Beim zuvor genannten mehrlagigen Aufbau des luftdurchlässigen Materials sind insbesondere die folgenden Ausführungsformen vorteilhaft.

Gemäß einer ersten bevorzugten Ausführungsform weist das luftdurchlässige Material mindestens eine Stützlage und mindestens eine Kapazitätslage auf, wobei mindestens eine oder sämtliche der Stützlagen Vliesstoffe und/oder mindestens eine oder sämtliche der Kapazitätslagen Vliesstoffe oder Faservliese, die einen recyclierten Kunststoff oder mehreren recyclierte Kunststoffe umfassen oder hieraus gebildet sind, darstellen.

Alternativ hierzu ist es ebenso möglich, dass das luftdurchlässige Material mindestens eine Stützlage, mindestens eine Feinfilterlage und mindestens eine Kapazitätslage aufweist, wobei mindestens eine oder sämtliche der Stützlagen und/oder mindestens eine oder sämtliche der Feinfilterlagen Vliesstoffe, die einen recyclierten Kunststoff oder mehrere recyclierte Kunststoffe umfassen oder hieraus gebildet sind und/oder mindestens eine oder sämtliche der Kapazitätslagen Vliesstoffe oder Faservliese, die einen recyclierten Kunststoff oder mehrere recyclierte Kunststoffe umfassen oder hieraus gebildet sind, darstellen.

Bei den beiden zuvor genannten Ausführungsführungsformen ist dabei vorgesehen, dass mindestens eine, bevorzugt sämtliche der Kapazitätslagen den voranstehend näher charakterisierten Vliesstoff, der faser- und/oder staubförmiges recycliertes Material und/oder Baumwolllinters umfasst, umfassen oder hieraus gebildet sind. Durch die erfolgte Vliesbindung weist die als Kapazitätslage ausgebildete Vliesstofflage dabei eine derart hohe mechanische Festigkeit auf, dass sie auch als Stützlage fungieren kann.

Ebenso ist es möglich die Außenlage auf der Reinluftseite aus einem relativ dünnen Material auf Basis von Linters und/oder Baumwollstaub zu machen. Als Außenlage kommt ebenso ein Spinnvlies, das recycliertes faser- und/oder staubförmiges Material beinhaltet, in Frage.

Eine weitere bevorzugt Ausführungsform sieht vor, dass das luftdurchlässige Material eine äußere Lage aus einem Spinnvlies, eine oder zwei Feinfilterlagen sowie eine innere Kapazitätslage aufweist. Die Spinnvlieslage umfasst dabei das faser- und/oder staubförmige recyclierte Material und/oder Baumwolllinters oder ist hieraus gebildet. Die Feinfilterlage(n) ist(sind) hierbei bevorzugt aus einem Meltblown, insbesondere aus einem Meltblown aus rPET oder rPP gebildet. Die Kapazitätslage ist z.B. ein Vliesstoff, der aus Textilien erzeugten Reißfasern, die mit Bikomponentenfasern gebunden sind, besteht. Die Bikomponentenfasern weisen dabei bevorzugt einen Kern aus rPET und eine Hülle aus frischem PP auf.

Die einzelnen Lagen sind dabei entsprechend ihrer Funktion näher bezeichnet.

Eine Stützlage im Sinne der vorliegenden Erfindung ist dabei eine Lage, die dem mehrlagigen Verbund des Filtermaterials die notwendige mechanische Festigkeit verleiht. Hierunter wird ein offener, poröser Vliesstoff bzw. ein Nonwoven mit leichtem Flächengewicht bezeichnet. Eine Stützlage dient in allererster Linie dazu, andere Lagen oder Schichten zu stützen und vor Abrasion zu schützen. Die Stützlage kann auch die größten Partikel filtern. Die Stützlage, wie auch jede andere Lage des Filtermaterials kann gegebenenfalls auch elektrostatisch aufgeladen sein, unter der Voraussetzung, dass das Material geeignete dielektrische Eigenschaften aufweist.

Eine Kapazitätslage bietet einen hohen Widerstand gegenüber Stoßbelastung, Filtern von großen Schmutzpartikeln, Filtern eines signifikanten Anteils von kleinen Staubpartikeln, Speichern bzw. Zurückhalten von großen Mengen an Partikeln, wobei der Luft ein einfaches Durchströmen erlaubt wird und somit ein geringer Druckabfall bei hoher Partikelbeladung resultiert. Dies wirkt sich insbesondere auf die Standzeit eines Staubsaugerfilterbeutels aus.

Eine Feinfilterlage dient der Erhöhung der Filtrationsleistung des mehrlagigen Filtermaterials durch Einfangen von Partikeln, die beispielsweise durch die Stützlage und/oder die Kapazitätslage hindurch gelangen. Zur weiteren Erhöhung der Feinfilterlage kann diese bevorzugt elektrostatisch (z.B. durch Coronaentladung) aufgeladen werden, um insbesondere die Abscheidung von Feinstaubpartikeln zu erhöhen.

Einen Überblick über die einzelnen Funktionslagen innerhalb mehrlagiger Filtermaterialien für Staubsaugerfilterbeutel bietet die WO 01/003802. Das luftdurchlässige Material der Wandung des erfindungsgemäßen Staubsaugerfilterbeutels kann hinsichtlich seiner Konstruktion beispielsweise wie in diesem Patentdokument aufgebaut sein mit der Maßgabe, dass zumindest eine der Lagen des dort beschriebenen mehrlagigen Filtermaterials für den Staubsaugerfilterbeutel aus einem recyclierten bzw. mehreren recyclierten Kunststoffen gebildet ist. Der Offenbarungsgehalt der WO 01/003802 wird hinsichtlich des Aufbaus der luftdurchlässigen Filtermaterialien ebenso in die vorliegende Anmeldung mit aufgenommen.

Spezielle Ausführungsformen der zuvor genannten Aspekte der vorliegenden Erfindung sehen vor, dass jede Stützlage ein Spinnvlies oder Scrim ist, vorzugsweise mit einer Grammatur von 5 bis 80 g/m², weiter bevorzugt von 10 bis 50 g/m², weiter bevorzugt von 15 bis 30 g/m² und/oder vorzugsweise mit einem Titer der das Spinnvlies bzw. das Scrim bildenden Fasern im Bereich von 0,5 dtex bis 15 dtex.

Bevorzugt weist das luftdurchlässige Material ein bis drei Stützlagen auf.

Im Falle des Vorhandenseins mindestens zweier Stützlagen ist es bevorzugt, dass die Gesamtgrammatur der Summe aller Stützlagen 10 bis 240 g/m², bevorzugt 15 bis 150 g/m², weiter bevorzugt 20 bis 100 g/m², weiter bevorzugt 30 bis 90 g/m², insbesondere 40 bis 70 g/m² beträgt.

Alternativ oder zusätzlich zu den zuvor genannten Ausführungsformen ist es ebenso möglich, dass sämtliche Stützlagen aus einem recyclierten Kunststoff oder mehreren recyclierten Kunststoffen, insbesondere aus rPET gebildet sind.

Bei den zuvor genannten Feinfilterlagen ist es von Vorteil, wenn jede Feinfilterlage ein Extrusionsvliesstoff, insbesondere ein Meltblown-Vliesstoff ist, vorzugsweise mit einer Grammatur von 5 bis 100 g/m², bevorzugt 10 bis 50 g/m², insbesondere 10 bis 30 g/m².

Das luftdurchlässige Material für die Zwecke des erfindungsgemäßen Staubsaugerfilterbeutels kann dabei vorteilhaft ein bis fünf Feinfilterlagen umfassen.

Im Falle des Vorhandenseins mindestens zweier Feinfilterlagen kann die Gesamtgrammatur der Summe aller Feinfilterlagen 10 bis 300 g/m², bevorzugt 15 bis 150 g/m², insbesondere 20 bis 50 g/m² betragen.

Bevorzugt sind sämtliche Feinfilterlagen aus einem recyclierten Kunststoff oder mehreren recyclierten Kunststoffen, insbesondere rPET gebildet.

Besonders bevorzugte Feinfilterlagen sind hierbei Meltblown-Vliesstoffe, die insbesondere aus rPET gebildet werden können. Das eingesetzte rPET kann dabei nicht metallisiert oder metallisiert sein. Das rPET kann somit beispielsweise aus Getränkeflaschen (bottle flake chips) oder metallisierten PET-Folien stammen. Ebenso ist es möglich, dass die Melt-Blown-Vliesstoffe Bikomponenten-Melt-Blown-Vliesstoffe darstellen. Hierbei ist es insbesondere von Vorteil, wenn der Kern einer derartigen Bikomponentenfaser aus rPET besteht, dieses Kernmaterial wird von einem weiteren thermoplastischen Kunststoff, beispielsweise Polypropylen umhüllt.

Alternativ oder zusätzlich zu den zuvor genannten Ausführungsformen ist es ebenso möglich und insbesondere bevorzugt, wenn mindestens eine, bevorzugt sämtliche Feinfilterlagen elektrostatisch aufgeladen sind. Dies setzt voraus, dass zumindest die Oberfläche der aufzuladenden Fasern aus einem dielektrischen Material gebildet ist. Im Falle des Einsatzes von metallisiertem PET-Recyclat ist diese Ausführungsform dann lediglich im Rahmen der zuvor angesprochenen Bikomponentenfasern möglich, bei denen das metallisierte rPET den Kern der Fasern bildet. Die elektrostatische Aufladung kann dabei insbesondere Coronaentladung erfolgen.

Bei den zuvor genannten Kapazitätslagen ist es insbesondere von Vorteil, wenn mindestens eine, bevorzugt jede Kapazitätslage ein Vliesstoff ist, der faser- und/oder staubförmiges recycliertes Material aus der Herstellung von Textilien und/oder Baumwolllintes umfasst, wobei jede Kapazitätslage vorzugsweise eine Grammatur von 5 bis 200 g/m², weiter bevorzugt von 10 bis 150 g/m², weiter bevorzugt von 20 bis 100 g/m², insbesondere 30 bis 50 g/m² aufweist.

Das luftdurchlässige Material weist bevorzugt ein bis fünf Kapazitätslagen auf.

Im Falle des Vorhandenseins mindestens zweier Kapazitätslagen kann die Gesamtgrammatur der Summe aller Kapazitätslagen 10 bis 300 g/m², bevorzugt 15 bis 200 g/m², weiter bevorzugt 20 bis 100 g/m², insbesondere 50 bis 90 g/m² betragen.

Eine besonders bevorzugte Ausführungsform sieht die folgenden mehrlagigen Varianten für das luftdurchlässige Material vor, mit einer vom Innenraum des Staubsaugerfilterbeutels ausgesehenen Lagenfolge:
Eine Stützlage, mindestens eine, vorzugsweise mindestens zwei Kapazitätslagen, vorzugsweise eine weitere Stützlage, mindestens eine vorzugsweise mindestens zwei Feinfilterlagen sowie eine weitere Stützlage. Für den Fall, dass die Kapazitätslage eine wie voran beschrieben hohe mechanische Festigkeit aufweist, kann dabei auch auf die innerste Stützlage verzichtet werden.

Eine oder zwei Kapazitätslagen, eine oder zwei Feinfilterlagen (Meltblownlagen), eine Stützlage (Spinnvlies).

Die Stützlagen und/oder Kapazitätslagen) können dabei aus einem Vliesstoffmaterial gebildet sein, das faser- und/oder staubförmiges recycliertes Material aus der Herstellung von Textilien, insbesondere Baumwolltextilien und/oder Baumwolllinters umfasst.

In einer besonders bevorzugten Ausführungsform bildet dieses Vliesstoffmaterial die mindestens eine Kapazitätslage, während die anderen Lagen kein faser- und/oder staubförmiges recycliertes Material aus der Herstellung von Textilien, insbesondere Baumwolltextilien und/oder Baumwolllinters umfassen.

Es können sämtliche Lagen bei den zuvor genannten Ausführungsformen auch mittels Schweißverbindungen, insbesondere wie in EP 1 795 427 A1 beschrieben, miteinander verbunden sein. Schweißverbindungen sind allerdings nicht zwingend notwendig.

Weiter vorteilhaft ist, dass der Staubsaugerfilterbeutel eine eine die Einlassöffnung einfassende Halteplatte aufweist, die aus einem oder mehreren recycelten Kunststoffen gebildet ist oder einen oder mehrere recycelte Kunststoffe umfasst. Insbesondere ist die Halteplatte dabei aus rPET gebildet oder umfasst rPET zu einem sehr hohen Anteil, beispielsweise zu mindestens 90 Gew.%. Gemäß dieser bevorzugten Ausführungsform ist somit eine weitere Erhöhung des Anteils an recyclierten Kunststoffen im Staubsaugerfilterbeutel möglich.

Gemäß einer weiter bevorzugten Ausführungsform ist vorgesehen, dass im Innenraum mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen oder aus einem Vliesstoffes, der faser- und/oder staubförmiges recycliertes Material aus der Herstellung von Textilien, insbesondere Baumwolltextilien und/oder Baumwolllinters umfasst, gebildet ist. Derartige Strömungsverteiler bzw. Diffusionen sind z.B. in den Patentanmeldungen EP 2 263 508, EP 2 442 703, DE 20 2006 020 047, DE 20 2008 003 248, DE 20 2008 005 050 bekannt. Auch die erfindungsgemäßen Staubsaugerfilterbeutel, inklusive Strömungsverteiler können entsprechend ausgestaltet sein.

Strömungsverteiler und Diffusoren werden somit vorzugsweise ebenfalls aus Vliesstoffen oder Laminaten von Vliesstoffen gefertigt. Für diese Elemente kommen bevorzugt die gleichen Materialien in Frage, wie für die Kapazitäts- und Verstärkungslagen.

Der recyclierte Kunststoff, der in speziellen Vliesstoffmaterialien oder in Halteplatten für die Staubsaugerfilterbeutel verwendet werden kann, ist dabei bevorzugt ausgewählt aus der Gruppe bestehend aus recyclierten Polyestern, insbesondere recycliertem Polyethylenterephthalat (rPET), recycliertem Polybutylenterephthalat (rPBT), recylcierter Polymilchsäure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden sowie Mischungen und Kombinationen hiervon.

Für viele Kunststoff-Recyclate bestehen einschlägige internationale Normen. Für PET-Kunststoff-Recyclate ist beispielsweise die DIN EN 15353:2007 einschlägig. PS-Recyclate werden in DIN EN 15342:2008 näher beschrieben. PE-Recyclate werden in DIN EN 15344:2008 behandelt. PP-Recyclate werden in DIN EN 15345:2008 charakterisiert. PVC-Recyclate sind in DIN EN 15346:2015 näher bezeichnet. Zum Zwecke der entsprechenden speziellen Kunststoffrecyclate macht sich die vorliegende Patentanmeldung die Definitionen dieser internationalen Normen zu Eigen. Die Kunststoff-Recyclate können dabei unmetallisiert sein. Ein Beispiel hierfür sind aus PET-Getränkeflaschen zurückgewonnene Kunststoffflakes oder -chips. Ebenso können die Kunststoff-Recyclate metallisiert sein, z.B. wenn die Recyclate aus metallischen Kunststofffolien erhalten wurden, insbesondere metallisierten PET-Folien (MPET).

Bei dem recyclierten Kunststoff handelt es sich insbesondere um recycliertes Polyethylenterephthalat (rPET), das beispielsweise aus Getränkeflaschen, insbesondere aus sog. Bottleflakes, also Stücke gemahlener Getränkeflaschen, erhalten wurde.

Die recyclierten Kunststoffe, insbesondere das recyclierte PET, sowohl in der metallisierten, als auch in der nicht metallisierten Fassung, können zu den entsprechenden Fasern versponnen werden, aus denen die entsprechenden Stapelfasern bzw. Meltblown- oder Spunbonds-Vliesstoffe für die Zwecke der vorliegenden Erfindung hergestellt werden können.

Eine besonders bevorzugte Ausführungsform sieht vor, dass die Gewichtssumme der Baumwolllinters und der ggfs. vorhandenen recyclierten Materialien, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt. Somit können sämtliche der vom Global Recycle Standard (GRS) von Textile Exchange vorgegebenen Klassifizierungen erreicht werden.

Der Staubsaugerfilterbeutel gemäß der vorliegenden Erfindung kann beispielsweise in Form eines Flachbeutels, eines Seitenfaltenbeutels, eines Blockbodenbeutels oder eines 3D-Beutels, wie beispielsweise eines Staubsaugerfilterbeutels für einen Upright-Staubsauger ausgebildet sein. Ein Flachbeutel weist dabei keine Seitenwände auf und ist aus zwei Materiallagen gebildet, wobei die beiden Materiallagen entlang ihres Umfangs unmittelbar miteinander verbunden, beispielsweise verschweißt oder verklebt sind. Seitenfaltenbeutel stellen eine modifizierte Form eines Flachbeutels dar und umfassen festgelegte oder ausstülpbare Seitenfalten. Blockbodenbeutel umfassen einen sogenannten Block- oder Klotzboden, der zumeist die Schmalseite des Staubsaugerfilterbeutels bildet; an dieser Seite ist in der Regel eine Halteplatte angeordnet.

Die vorliegende Erfindung wird anhand der nachfolgenden beispielhaften Ausführungen näher beleuchtet, ohne die Erfindung auf die speziellen dargestellten Ausführungen zu beschränken.

Es werden Filterbeutel konzipiert, die eine oder mehrere Lagen aus einem Airlaid-Vliesstoff aufweisen. Zusätzlich können die nachfolgend beschriebenen erfindungsgemäßen Filterbeutel eine oder mehrere Lagen rPET-Filamente oder rPET-Stapelfasern aufweisen, der aus Baumwollstaub und Bicomponentenfasern gebildet wird. Die unterschiedlichen Vliesstoffe sind dabei nur für bestimmte Materiallagen geeignet. Um den Anteil an wiederverwerteten Rohstoffen noch weiter zu steigern, ist zusätzlich noch der Einsatz einer Halteplatte möglich, die aus rPET besteht oder zumindest rPET aufweist.

Zu den einzelnen Filterlagen:
Als Stützlagen kommen insbesondere Spinnvlieslagen aus rPET mit einem Flächengewicht von 5 bis 50 g/m² und einem Titer von 1 dtex bis 15 dtex in Frage. Als Rohstoff werden PET-Abfälle (z. B. Stanzabfälle) und sogenannte Bottleflakes, also Stücke gemahlener Getränkeflaschen verwendet. Um die unterschiedliche Färbung der Abfälle zu überdecken, ist es möglich, das Recyclat einzufärben. Als thermisches Bindeverfahren für die Verfestigung des Spinnvlieses zu einem Spunbond ist insbesondere das HELIX® (Comerio Ercole) Verfahren vorteilhaft.

Als Feinfilterlagen werden eine oder mehrere Lagen Meltblown aus rPET mit einem Flächengewicht von jeweils 5 bis 30 g/m² eingesetzt. Zusätzlich können noch eine oder mehrere Meltblown Vliesstofflagen aus PP vorhanden sein. Zumindest diese Lage(n) werden durch eine Coronaentladung elektrostatisch aufgeladen. Die Lagen aus rPET können ebenfalls elektrostatisch geladen werden. Dabei ist lediglich zu beachten, dass dann keine metallisierten PET-Abfälle für die Fertigung verwendet werden. Alternativ können die Meltblownfilamente auch aus Bicomponentenfasern bestehen, bei denen der Kern aus rPET und die Hülle aus einem Kunststoff, der sich besonders gut elektrostatisch aufladen lässt (z. B. PP, PC, PET), gebildet wird.

Eine oder mehrere Kapazitätslagen enthalten rPET-Stapelfasern oder rPET-Filamente oder werden auf Basis von Baumwollstaub und Bicomponentenfasern hergestellt. Zur Herstellung von Kapazitätslagen sind unterschiedliche Verfahren geeignet. Gebräuchlich sind Kardierverfahren oder Airlaidverfahren, bei denen zunächst Stapelfasern abgelegt werden, die dann für gewöhnlich in einem Vliesbindeschritt (z. B. durch Vernadelung, Wasserstrahlverfestigung, Ultraschallkalandrierung oder auch mittels thermischer Verfestigung im Durchströmofen auch mittels Bikomponentenfasern oder Bindefasern) zu einem Vliesstoff verfestigt werden. Zur Kalandrierung ist insbesondere das HELIX® (Comerio Ercole) Verfahren vorteilhaft.

Ebenfalls eingesetzt wird ein Verfahren, bei dem das primär entstandene Faservlies nicht verfestigt wird, sondern mit möglichst wenigen Schweißpunkten an einen Vliesstoff gebunden wird. Dieses Verfahren ist allerdings nicht für die Variante aus Baumwollstaub geeignet. Bei beiden Verfahren ist es möglich, Stapelfasern aus rPET zu verwenden. Kapazitätslagen können auch als Extrusionsvliesstoffe oder Extrusionsfaservliese gefertigt werden. Für diese Vliesstoffe ist ein Einsatz von rPET ebenfalls problemlos realisierbar.

Die Filamente oder Stapelfasern können auch aus Bikomponentenmaterialien bestehen, bei denen der Kern aus rPET und die Hülle aus einem Kunststoff, der sich besonders gut elektrostatisch aufladen lässt (z. B. PP, PC, PET) gebildet wird.

Alternativ oder ergänzend können auch eine oder mehrere Lagen eines Airlaid-Vliesstoffes vorhanden sein, der aus Bikomponentenfasern und Baumwollstaub gebildet wird.

Das Flächengewicht der einzelnen Kapazitätslagen liegt bevorzugt zwischen 10 und 100 g/m².

Die unterschiedlich hergestellten Kapazitätslagen können selbstverständlich auch miteinander kombiniert werden.

Um den Anteil an Recyclaten weiter zu erhöhen, ist die Verwendung einer Halteplatte aus rPET möglich. Wenn die Abdichtung zum Staubsaugerstutzen durch das Beuteilmaterial übernommen wird, kann die Halteplatte ausschließlich aus rPET bestehen. Für den Fall, dass die Halteplatte die Dichtfunktion übernehmen muss, kann eine TPE-Dichtung angespritzt oder angeklebt werden.

Bei Ausnutzung aller Möglichkeiten wird so ein Anteil an Recyclaten bzw. Abfallstoffen von bis zu 96 % möglich. Die folgenden Tabellen geben einige konkrete Ausführungsbeispiele mit einem Recyclatanteil von 61 % bis 89 %.

Aus den verschiedenen Recyclathaltigen Vliesstoffen bzw. Faservliesen wurden die nachfolgend dargestellten Staubsaugerfilterbeutel unter Verwendung der angegebenen Materialien konzipiert, deren genaue Zusammensetzung bzw. deren Aufbau in den nachfolgenden Tabellen wiedergegeben ist. Die Staubsaugerfilterbeutel stellen dabei Flachbeutel von rechteckiger Geometrie dar, die eine Abmessung von 300 mm x 280 mm aufweisen.

**Beispiel 1**

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 0 |
| Filterbeutel gesamt | | 31,4 | 60,5 |

Der Staubsaugerfilterbeutel gemäß Beispiel 1 ist dabei ebenso aus einem 7-lagigen luftdurchlässigen Material gebildet. Hierbei ist auf der Reinluftseite eine Stützlage (außen) angeordnet, an die sich in Richtung Innenraum zwei Feinfilterlagen (Meltblown auf virgin PP) anschließen. Die beiden Meltblownlagen werden von einer weiteren Stützlage eingefasst. Hieran schließen sich zwei Kapazitätslagen C und D an, die abschließend von einer auf der Dreckluftseite (innen) liegenden Stützlage eingeschlossen werden. Die Kapazitätslage C und D ist dabei aus einem Vliesstoffmaterial gebildet, das zu 80 Gew.-% aus Baumwollstaub und zu 20 % aus BiCo-Bindefaser gebildet ist. Dieses Vliesstoffmaterial ist detailliert in der WO 2011/057641 A1 beschrieben. Der Anteil des Baumwollstaubs in den Kapazitätslagen wird dabei zum Gesamtanteil ein Recyclat hinzugezählt.

Mit einer derartigen Ausführungsform wird ein Anteil von recycliertem Material, d. h. der Summe an recyclierten Kunststoffen, sowie Baumwollstaub von 60,5 Gew.-%, bezogen auf den gesamten Staubsaugerfilterbeutel erzielt.

**Beispiel 2**

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage A | 35 | 5,9 | 100 |
| Kapazitätslage D | 35 | 5,9 | 80 |
| Stützlage innen | 15 | 2,5 | 100 |
| Halteplatte | | 5,0 | 0 |
| Filterbeutel gesamt | | 31,4 | 64,3 |

Der Staubsaugerfilterbeutel gemäß Beispiel 2 ist dabei in Analogie zum Staubsaugerfilterbeutel gemäß Beispiel 1 aufgebaut. Die äußere Kapazitätslage entspricht dabei einer Kapazitätslage gemäß den Beispielen 6 bis 8, d. h. einem kardierten Stapelfaservliesstoff, der zu 100 % aus Fasern aus recyceltem PET gebildet ist. Der Recyclat-Anteil eines fertigen Staubsaugerfilterbeutels entspricht 64,3 Gew.-%.

**Beispiel 3**

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 100 |
| Filterbeutel gesamt | | 31,4 | **76,4** |

Der Staubsaugerfilterbeutel gemäß Beispiel 3 entspricht einem Staubsaugerfilterbeutel gemäß Beispiel 1 mit dem Unterschied, dass die Halteplatte zu 100 % aus rPET gebildet ist. Der Gesamtanteil an recyclierten Materialien in diesem Staubsaugerfilterbeutel beträgt 76,4 Gew.-%.

**Beispiel 4**

| | Grammatur [g/m²] | Gewicht pro Beutel [g] | Anteil Recyclat [%] |
|---|---|---|---|
| Stützlagen außen | 25 | 4,2 | 100 |
| Meltblown | 15 | 2,5 | 80 |
| Meltblown | 15 | 2,5 | 80 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 100 |
| Filterbeutel gesamt | | 31,4 | **89,3** |

Der Staubsaugerfilterbeutel gemäß Beispiel 4 entspricht dem Staubsaugerfilterbeutel gemäß Beispiel 3, mit dem Unterschied, dass die beiden Feinfilterlagen aus einem Bikomponenten-Meltblown mit einem Kern aus rPET und einer Hülle aus Polypropylen gebildet sind. Der Gesamtanteil an Recyclat eines derartigen Staubsaugerfilterbeutels beträgt 89,3 Gew.-%.

Die vorliegende Erfindung betrifft zudem eine spezielle Bikomponentenfaser, die insbesondere zur Herstellung eines Vliesstoffes, der ein faser- und/oder staubförmiges recycliertes Material aus der Herstellung von Textilien beinhaltet, geeignet ist. Diese Bikomponentenfaser wird dabei zur Bindung des faser- und/oder staubförmigen recyclierten Materials eingesetzt. Diese Bikomponentenfaser ist vom Kern-Mantel-Typ (core-core-bicomponent fiber) und umfasst einen Kern aus einem recyclierten Kunststoff, der insbesondere recycliertes Polyethylentherephthalat (rPET) oder recycliertes Polypropylen (rPP) darstellt.

Eine bevorzugte Ausführungsform sieht vor, dass der Mantel aus einem frischen Kunststoff (virgin Kunststoff), insbesondere Polypropylen gebildet ist.

Der Mantel kann hierbei die Ladungspersistenz-Additive beinhalten, insbesondere Magnesiumstearat.

Der Gewichtsanteil des Kerns, bezogen auf die gesamte Faser beträgt vorzugsweise von 50 bis 95 Gew.-%.

Insbesondere weist die Bikomponentenfaser einen Durchmesser von 0,5 bis 10 µm auf. Die Bikomponentenfaser hat hierbie insbesondere einen kreisförmigen Querschnitt.

## Patentansprüche

1. Staubsaugerfilterbeutel, umfassend einen Innenraum umschließende Wandung aus einem luftdurchlässigen Material sowie eine in die Wandung eingebrachte Einlassöffnung, wobei
das luftdurchlässige Material mindestens eine Lage eines Vliesstoffes und/oder eines Faservlieses umfasst, der bzw. das faser- und/oder staubförmiges recycliertes Material aus der Herstellung von Textilien und/oder Baumwolllinters umfasst
**dadurch gekennzeichnet, dass** das luftdurchlässige Material
mindestens eine Spinnvlieslage, mindestens eine Feinfilterlage sowie mindestens eine Kapazitätslage,
oder
mindestens eine Stützlage und mindestens eine Kapazitätslage, wobei mindestens eine oder sämtliche der Stützlagen Vliesstoffe und/oder mindestens eine oder sämtliche der Kapazitätslagen Vliesstoffe oder Faservliese, die einen recyclierten Kunststoff oder mehrere recyclierte Kunststoffe umfassen oder hieraus gebildet sind, darstellen,
oder
mindestens eine Stützlage, mindestens eine Feinfilterlage und mindestens eine Kapazitätslage wobei mindestens eine oder sämtliche der Stützlagen und/oder mindestens eine oder sämtliche der Feinfilterlagen Vliesstoffe, die aus einem recyclierten Kunststoff oder mehreren recyclierten Kunststoffen gebildet sind und/oder mindestens eine oder sämtliche der Kapazitätslagen Vliesstoffe oder Faservliese, die einen recyclierten Kunststoff oder mehrere recyclierte Kunststoffe umfassen öder hieraus gebildet sind, darstellen,
wobei mindestens eine, bevorzugt sämtliche der Kapazitätslagen den Vliesstoff, der faser- und/oder staubförmiges recycliertes Material und/oder Baumwolllinters umfasst, umfassen oder hieraus gebildet sind.

2. Staubsaugerfilterbeutel nach Anspruch 1, **dadurch gekennzeichnet, dass** das faser- und/oder staubförmiges recyclierte Material ausgewählt ist aus der Gruppe bestehend aus Textilfasern, insbesondere Textilfasern aus Baumwolle, Polyester, Elastan, Flachs, Leinen, Hanf, Kamelhaar, Lama, Mohair, Polyamid, Polyethylen, Ramie, Seide, Viskose, Jute, Kokos, Modal, Polyakryl, Polypropylen, Schafwolle, Sisal, Ziegenhaar sowie Baumwollstaub sowie Mischungen und Kombinationen hiervon ist.

3. Staubsaugerfilterbeutel nach einem der vorhergehenden Ansprüche, **dadurch gekennzeichnet, dass**
die mindestens eine faser- und/oder staubförmiges recycliertes Material und/oder Baumwolllinters umfassende Lage des Vliesstoffes bis zu 95 Gew.-%, bevorzugt 70 bis 90 Gew.-% des faser- und/oder staubförmigen recyclierten Materials und/oder Baumwolllinters und mindestens 5 Gew.-%, bevorzugt 10 bis 30 Gew.-% an Bindefasern, insbesondere Bikomponentenfasern umfasst oder hieraus besteht, und/oder die Bindefasern Stapelfasern mit einer Länge von 2 bis 75 mm, bevorzugt 2 bis 25 mm aufweisen.

4. Staubsaugerfilterbeutel nach Anspruch 3, **dadurch gekennzeichnet, dass** die Bikomponentenfasern aus einem Kern, bestehend aus einem ersten thermoplastischen Material und einem Mantel, bestehend aus einem verglichen mit dem ersten thermoplastischen Material bei geringeren Temperaturen schmelzenden zweiten thermoplastischen Material, bestehen, wobei bevorzugt der Kern oder sowohl Kern als auch Mantel aus einem recyclierten Kunststoff oder mehreren recyclierten Kunststoffen nach der Norm DIN EN 15347:2007 besteht.

5. Staubsaugerfilterbeutel nach einem der vorhergehenden Ansprüche, **dadurch gekennzeichnet, dass** das luftdurchlässige Material mehrlagig aufgebaut ist, wobei das luftdurchlässige Material zusätzlich zur mindestens einen Lage des Vliesstoffes und/oder Faservlieses, der bzw. das faser- und/oder staubförmiges recycliertes Material und/oder Baumwolllinters umfasst, mindestens eine weitere Lage aufweist, die einen Vliesstoff und/oder ein Faservlies umfasst oder hieraus gebildet ist, wobei mindestens eine, mehrere oder sämtliche der zusätzlichen Lagen einem oder mehrere recyclierte Kunststoffe nach der Norm DIN EN 15347:2007 umfassen oder hieraus gebildet sind.

6. Staubsaugerfilterbeutel nach vorhergehendem Anspruch, **dadurch gekennzeichnet, dass**
a) jede Stützlage ein Spinnvlies oder Scrim ist, vorzugsweise mit einer Grammatur von 5 bis 80 g/m², weiter bevorzugt von 10 bis 50 g/m², weiter bevorzugt von 15 bis 30 g/m² und/oder vorzugsweise mit einem Titer der das Spinnvlies bzw. das Scrim bildenden Fasern im Bereich von 0,5 dtex bis 15 dtex,
b) das luftdurchlässige Material 1 bis 3 Stützlagen umfasst,
c) im Falle des Vorhandenseins mindestens zweier Stützlagen die Gesamtgrammatur der Summe aller Stützlagen 10 bis 240 g/m², bevorzugt 15 bis 150 g/m², weiter bevorzugt 20 bis 100 g/m², weiter bevorzugt 30 bis 90 g/m², insbesondere 40 bis 70 g/m² beträgt, und/oder
d) sämtliche Stützlagen aus einem recyclierten Kunststoff oder mehreren recyclierten Kunststoffen, nach der Norm DIN EN 15347:2007, insbesondere aus rPET nach der Norm DIN EN 15353:2007 gebildet sind.

7. Staubsaugerfilterbeutel nach einem der beiden vorhergehenden Ansprüche, **dadurch gekennzeichnet, dass**
a) jede Feinfilterlage ein Extrusionsvliesstoff, insbesondere ein Meltblown-Vliesstoff ist, vorzugsweise mit einer Grammatur von 5 bis 100 g/m², bevorzugt 10 bis 50 g/m², insbesondere 10 bis 30 g/m²,
b) das luftdurchlässige Material 1 bis 5 Feinfilterlagen umfasst,
c) im Falle des Vorhandenseins mindestens zweier Feinfilterlagen die Gesamtgrammatur der Summe aller Feinfilterlagen 10 bis 300 g/m², bevorzugt 15 bis 150 g/m², insbesondere 20 bis 50 g/m² beträgt,
d) mindestens eine, bevorzugt sämtliche Feinfilterlagen aus einem recyclierten Kunststoff oder mehreren recyclierten Kunststoffen, nach der Norm DIN EN 15347:2007, insbesondere aus rPET nach der Norm DIN EN 15353:2007 gebildet sind und/oder
e) mindestens eine, bevorzugt sämtliche Feinfilterlagen elektrostatisch aufgeladen sind.

8. Staubsaugerfilterbeutel nach einem der Ansprüche 6 bis 8, **dadurch gekennzeichnet, dass**
a) mindestens eine, bevorzugt jede Kapazitätslage ein Vliesstoff ist, der faser- und/oder staubförmiges recycliertes Material aus der Herstellung von Textilien, insbesondere Baumwolltextilien und/oder Baumwolllinters umfasst, wobei jede Kapazitätslage vorzugsweise eine Grammatur von 5 bis 200 g/m², weiter bevorzugt von 10 bis 150 g/m², weiter bevorzugt von 20 bis 100 g/m², insbesondere 30 bis 50 g/m² aufweist,
b) das luftdurchlässige Material 1 bis 5 Kapazitätslagen umfasst, und/oder
c) im Falle des Vorhandenseins mindestens zweier Kapazitätslagen die Gesamtgrammatur der Summe aller Kapazitätslagen 10 bis 300 g/m², bevorzugt 15 bis 200 g/m², weiter bevorzugt 20 bis 100 g/m², insbesondere 50 bis 90 g/m² beträgt.

9. Staubsaugerfilterbeutel nach einem der Ansprüche 6 bis 9, **dadurch gekennzeichnet, dass** das luftdurchlässige Material mehrlagig ausgebildet ist mit einer vom Innenraum des Staubsaugerfilterbeutels aus gesehenen Lagenfolge:
eine Stützlage, mindestens eine, vorzugsweise mindestens zwei Kapazitätslagen, vorzugsweise eine weitere Stützlage, mindestens eine vorzugsweise mindestens zwei Feinfilterlagen sowie eine weitere Stützlage.

10. Staubsaugerfilterbeutel nach einem der vorhergehenden Ansprüche,
**dadurch gekennzeichnet, dass**
der Staubsaugerfilterbeutel eine die Einlassöffnung einfassende Halteplatte aufweist, die aus einem oder mehreren recycelten Kunststoffen gebildet ist oder einen oder mehrere recycelte Kunststoffe nach der Norm DIN EN 15347:2007 umfasst,
und/oder
im Innenraum mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen nach der Norm DIN EN 15347:2007 oder aus einem Vliesstoffes, der faser- und/oder staubförmiges recycliertes Material aus der Herstellung von Textilien, insbesondere Baumwolltextilien und/oder Baumwolllinters umfasst, gebildet ist.

11. Staubsaugerfilterbeutel nach einem der vorhergehenden Ansprüche, **dadurch gekennzeichnet, dass** der recyclierte Kunststoff nach der Norm DIN EN 15347:2007 ausgewählt ist aus der Gruppe bestehend aus recyclierten Polyestern, insbesondere recycliertem Polyethylenterephthalat (rPET), nach der Norm DIN EN 15353:2007, recycliertem Polybutylenterephthalat (rPBT), recylcierter Polymilchsäure (rPLA), recycliertem Polyglycolid und/oder recycliertem Polycaprolacton; recyclierten Polyolefinen, insbesondere recycliertem Polypropylen (rPP nach der Norm DIN EN 15345:2008), recycliertem Polyethylen nach der Norm DIN EN 15344:2008 und/oder recycliertem Polystyrol (rPS nach die Norm DIN EN 13342:2008); recycliertem Polyvinylchlorid (rPVC nach der Norm DIN EN 15346:2015 recyclierten Polyamiden sowie Mischungen und Kombinationen hiervon.

12. Staubsaugerfilterbeutel nach einem der vorhergehenden Ansprüche, **dadurch gekennzeichnet, dass** der Gewichtsanteil aller recyclierten Materialien und/oder der Baumwollinters, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt.

13. Staubsaugerfilterbeutel nach einem der vorhergehenden Ansprüche, in Form eines Flachbeutels, eines Blockbodenbeutels oder eines 3D-Beutels.

## Claims

1. A vacuum cleaner filter bag, comprising an interior-enclosing wall of an air-permeable material as well as an inlet opening made in the wall, wherein the air-permeable material comprises at least one layer of a non-woven fabric and/or of a fibre non-woven fabric, which comprise(s) filiform and/or dust-like, recycled material from the manufacture of textiles and/or cotton linters,
**characterized in that** the air-permeable material comprises at least one spun-bonded fabric layer, at least one fine filter layer and at least one capacity layer,
or
at least one support layer and at least one capacity layer, wherein at least one or all of the support layers represent non-woven fabrics and/or at least one or all of the capacity layers represent non-woven fabrics or fibre fleeces, which comprise or are formed from a recycled plastics material or a plurality of recycled plastics materials,
or
at least one support layer, at least one fine filter layer and at least one capacity layer, wherein at least one or all of the support layers and/or at least one or all of the fine filter layers represent non-woven fabrics, which are formed from a recycled plastics material or a plurality of recycled plastics materials, and/or at least one or all of the capacity layers represent non-woven fabrics or fibre non-woven fabrics, which comprise or are formed from a recycled plastics material or a plurality of recycled plastics materials, wherein at least one, preferably all of the capacity layers comprise(s) or is/are formed from the non-woven fabric which comprises filiform and/or dust-like, recycled material and/or cotton linters.

2. A vacuum cleaner filter bag according to claim 1, **characterized in that** the filiform and/or dust-like, recycled material is selected from the group consisting of textile fibres, in particular textile fibres of cotton, polyester, elastane, flax, linen, hemp, camel hair, llama, mohair, polyamide, polyethylene, ramie, silk, viscose, jute, coir, modal, polyacryl, polypropylene, sheep's wool, sisal, goat hair as well as cotton dust as well as mixtures and combinations thereof.

3. A vacuum cleaner filter bag according to any one of the preceding claims, **characterized in that** the at least one non-woven fabric layer comprising filiform and/or dust-like, recycled material and/or cotton linters comprises or is composed of up to 95 percent by weight, preferably 70 to 90 percent by weight, of the filiform and/or dustlike, recycled material and/or cotton linters and at least 5 percent by weight, preferably 10 to 30 percent by weight, of binder fibres, in particular bi-component fibres , and/or the binder fibres have staple fibres with a length from 2 to 75 mm, preferably 2 to 25 mm.

4. A vacuum cleaner filter bag according to claim 3, **characterised in that** the bi-component fibres are composed of a core, consisting of a first thermoplastic material, and a sheath, consisting of a second thermoplastic material melting at lower temperatures compared with the first thermoplastic material, wherein preferably the core or both core and sheath is/are composed of a recycled plastics material or a plurality of recycled materials in accordance with DIN EN 15347 : 2007.

5. A vacuum cleaner filter bag according to any one of the preceding claims, **characterized in that** the air-permeable material is of a multi-layered construction, wherein in addition to the at least one layer of the non-woven fabric and/or fibre fleece, which comprise filiform and/or dust-like, recycled material and/or cotton linters, the air-permeable material has at least one further layer which comprises or is formed from a non-woven fabric and/or a fibre non-woven fabric, wherein at least one, a plurality or all of the additional layers comprise(s) or is/are formed from one or a plurality of recycled plastics materials in accordance with DIN EN 15347 : 2007.

6. A vacuum cleaner filter bag according to the preceding claim, **characterized in that**
a) each support layer is a spun-bonded fabric or scrim, preferably with a grammage from 5 to 80 g/m², more preferably from 10 to 50 g/m², more preferably from 15 to 30 g/m², and/or preferably with a titre of the fibres forming the spun-bonded fabric or the scrim in the range from 0.5 dtex to 15 dtex,
b) the air-permeable material comprises 1 to 3 support layers,
c) in the event of the presence of at least two support layers, the total grammage of the sum of all support layers amounts to 10 to 240 g/m², preferably 15 to 150 g/m², more preferably 20 to 100 g/m², more preferably 30 to 90 g/m², in particular 40 to 70 g/m², and/or
d) all support layers are formed from a recycled plastics material or a plurality of recycled plastics materials, in accordance with DIN EN 15347 : 2007, in particular from rPET in accordance with DIN EN 15353 : 2007.

7. A vacuum cleaner filter bag according to any one of the two preceding claims, **characterized in that**
a) each fine filter layer is an extruded non-woven fabric, in particular a meltblown non-woven fabric, preferably with a grammage from 5 to 100 g/m², preferably 10 to 50 g/m², in particular 10 to 30 g/m²,
b) the air-permeable material comprises 1 to 5 fine filter layers,
c) in the event of the presence of at least two fine filter layers, the total grammage of the sum of all fine filter layers amounts to 10 to 300 g/m², preferably 15 to 150 g/m², in particular 20 to 50 g/m²,
d) at least one, preferably all fine filter layers are formed from a recycled plastics material or a plurality of recycled plastics materials, in accordance with DIN EN 15347 : 2007, in particular from rPET in accordance with DIN EN 15353 : 2007 and/or
e) at least one, preferably all fine filter layers are electrostatically charged.

8. A vacuum cleaner filter bag according to any one of claims 6 to 8, **characterized in that**
a) at least one, preferably each, capacity layer is a non-woven fabric which comprises filiform and/or dust-like, recycled material from the manufacture of textiles, in particular cotton textiles and/or cotton linters, wherein each capacity layer has preferably a grammage from 5 to 200 g/m², more preferably from 10 to 150 g/m², more preferably from 20 to 100 g/m², in particular 30 to 50 g/m²,
b) the air-permeable material comprises 1 to 5 capacity layers, and/or
c) in the event of the presence of at least two capacity layers, the total grammage of the sum of all capacity layers amounts to 10 to 300 g/m², preferably 15 to 200 g/m², more preferably 20 to 100 g/m², in particular 50 to 90 g/m².

9. A vacuum cleaner filter bag according to any one of claims 6 to 9, **characterized in that** the air-permeable material is multi-layered with, viewed outwards from the interior of the vacuum cleaner filter bag, a layer sequence:
a support layer, at least one, preferably at least two, capacity layers, preferably a further support layer, at least one, preferably at least two, fine filter layers as well as a further support layer.

10. A vacuum cleaner filter bag according to any one of the preceding claims,
**characterized in that** the vacuum cleaner filter bag has a holding plate surrounding the inlet opening, which holding plate is formed from one or a plurality of recycled plastics materials or comprises one or a plurality of recycled plastics materials in accordance with DIN EN 15347 : 2007,
and/or
at least one flow distributor and/or at least one diffuser is/are arranged in the interior, wherein preferably the at least one flow distributor and/or the at least one diffuser is/are formed from a recycled plastics material or a plurality of recycled plastics materials in accordance with DIN EN 15347 : 2007 or from a non-woven material which comprises filiform and/or dust-like, recycled material from the manufacture of textiles, in particular cotton textiles and/or cotton linters.

11. A vacuum cleaner filter bag according to any one of the preceding claims, **characterized in that** the recycled plastics material in accordance with DIN EN 15347 : 2007 is selected from the group consisting of recycled polyesters, in particular recycled polyethylene terephthalate (rPET), in accordance with DIN EN 15353 : 2007, recycled polybutylene terephthalate (rPBT), recycled polylactic acid (rPLA), recycled polyglycolide and/or recycled polycaprolactone; recycled polyolefins, in particular recycled polypropylene (rPP in accordance with DIN EN 15345 : 2008), recycled polyethylene in accordance with DIN EN 15344 : 2008 and/or recycled polystyrene (rPS in accordance with DIN EN 13342 : 2008), recycled polyvinyl chloride (rPVC in accordance with DIN EN 15346 :2015), recycled polyamides as well as mixtures and combinations thereof.

12. A vacuum cleaner filter bag according to any one of the preceding claims, **characterised in that** the proportion by weight of all recycled materials and/or of the cotton linters, related to the total weight of the vacuum cleaner filter bag, amounts to at least 25%, preferably at least 30%, more preferably at least 40%, more preferably at least 50%, more preferably at least 60%, more preferably at least 70%, more preferably at least 80%, more preferably at least 90%, in particular at least 95%.

13. A vacuum cleaner filter bag according to any one of the preceding claims, in the form of a flat bag, a block bottom bag or a 3D bag.

## Revendications

1. Sac filtrant pour aspirateur, comprenant une paroi entourant un espace intérieur, constituée d'un matériau perméable à l'air, ainsi qu'une ouverture d'entrée, aménagée dans la paroi,
le matériau perméable à l'air comprenant au moins une couche d'un non-tissé et/ou d'une nappe de fibres, qui comprend un matériau recyclé, sous forme fibreuse et/ou pulvérulente, provenant de la fabrication de textiles et/ou de linters de coton,
**caractérisé en ce que** le matériau perméable à l'air comprend
au moins une couche de filé-lié, au moins une couche de filtration fine, ainsi qu'au moins une couche de capacité,
ou
au moins une couche support et au moins une couche de capacité, au moins une ou la totalité des couches supports représentant des non-tissés et/ou au moins une ou la totalité des couches de capacité représentant des non-tissés ou des nappes de fibres, qui comprennent, ou en sont constitués, un plastique recyclé ou plusieurs plastiques recyclés,
ou
au moins une couche support, au moins une couche de filtration fine et au moins une couche de capacité, au moins une ou la totalité des couches supports et/ou au moins une ou la totalité des couches de filtration fine représentant des non-tissés, qui sont formés d'un plastique recyclé ou de plusieurs plastiques recyclés, et au moins une ou la totalité des couches de capacité représentant des non-tissés ou des nappes de fibres, qui comprennent, ou en sont constitués, un plastique recyclé ou plusieurs plastiques recyclés,
au moins une, de préférence la totalité des couches de capacité comprenant, ou en étant constituées, le non-tissé qui comprend un matériau recyclé sous forme fibreuse et/ou pulvérulente et/ou des linters de coton.

2. Sac filtrant pour aspirateur selon la revendication 1, **caractérisé en ce que** le matériau recyclé sous forme fibreuse et/ou pulvérulente est choisi dans le groupe consistant en les fibres textiles, en particulier les fibres textiles de coton, de polyester, d'élasthanne, le lin commun, le lin, le chanvre, le poil de chameau, l'alpaga, le mohair, le polyamide, le polyéthylène, la ramie, la soie, la viscose, le jute, la fibre de coprah, le modal, les fibres polyacryliques, le polypropylène, la laine de mouton, le sisal, le poil de chèvre, ainsi que la poudre de coton, ainsi que les mélanges et combinaisons de ceux-ci.

3. Sac filtrant pour aspirateur selon l'une des revendications précédentes, **caractérisé en ce que**
la couche du non-tissé comprenant au moins un matériau et/ou des linters de coton recyclés sous forme fibreuse et/ou pulvérulente comprend, ou en est constitué, jusqu'à 95 % en poids, de préférence 70 à 90 % en poids, par rapport au matériau recyclé fibreux et/ou aux linters de coton, et au moins 5 % en poids, de préférence 10 à 30 % en poids de fibres de liaison, en particulier de fibres bicomposants, et/ou les fibres de liaison comprennent des fibres coupées ayant une longueur de 2 à 75 mm, de préférence de 2 à 25 mm.

4. Sac filtrant pour aspirateur selon la revendication 3, **caractérisé en ce que** les fibres bicomposants sont constituées d'un cœur, constitué d'un premier matériau thermoplastique et d'une gaine, constituée d'un second thermoplastique, fondant à une température inférieure à la température de fusion du premier matériau thermoplastique, le noyau, ou encore tant le noyau que la gaine, étant constitué d'un plastique recyclé ou de plusieurs plastiques recyclés selon la norme DIN EN 15347:2007.

5. Sac filtrant pour aspirateur selon l'une des revendications précédentes, **caractérisé en ce que** le matériau perméable à l'air a une structure multicouche, le matériau perméable à l'air présentant, en plus de l'au moins une couche du non-tissé et/ou de la nappe de fibres, qui comprend un matériau recyclé fibreux et/ou pulvérulent et/ou des linters de coton, au moins une couche supplémentaire, qui comprend, ou en est constituée, un non-tissé et/ou une nappe de fibres, au moins une, plusieurs ou la totalité des couches supplémentaires comprenant, ou en étant constituées, un ou plusieurs plastiques recyclés, selon la norme DIN EN 15347:2007.

6. Sac filtrant pour aspirateur selon la revendication précédente, **caractérisé en ce que**
a) chaque couche support est une nappe de fibres ou un canevas, ayant de préférence un grammage de 5 à 80 g/m², plus préférentiellement de 10 à 50 g/m², plus préférentiellement de 15 à 30 g/m² et/ou de préférence présentant un titre des fibres formant la nappe de fibres ou le canevas compris dans la plage de 0,5 dtex à 15 dtex,
b) le matériau perméable à l'air comprend 1 à 3 couches,
c) en présence d'au moins deux couches supports, le grammage de la somme de toutes les couches supports est de 10 à 240 g/m², de préférence de 15 à 150 g/m², plus préférentiellement de 20 à 100 g/m², plus préférentiellement de 30 à 90 g/m², en particulier de 40 à 70 g/m², et/ou
d) la totalité des couches supports sont formées d'un plastique recyclé ou de plusieurs plastiques recyclés, selon la norme DIN EN 15347:2007, en particulier de rPET, selon la norme DIN EN 15353:2007.

7. Sac filtrant pour aspirateur selon l'une des deux revendications précédentes, **caractérisé en ce que**
a) chaque couche de filtration fine est un non-tissé obtenu par extrusion, en particulier un non-tissé obtenu par fusion-soufflage, présentant de préférence un grammage de 5 à 100 g/m², de préférence de 10 à 50 g/m², en particulier de 10 à 30 g/m²,
b) le matériau perméable à l'air comprend 1 à 5 couches de filtration fine,
c) en présence d'au moins deux couches de filtration fine, le grammage total de la somme de toutes les couches de filtration fine est de 10 à 300 g/m², de préférence de 15 à 150 g/m², en particulier de 20 à 50 g/m²,
d) au moins une, de préférence la totalité des couches de filtration fine sont formées d'un plastique recyclé ou de plusieurs plastiques recyclés, selon la norme DIN EN 15347:2007, en particulier de rPET, selon la norme DIN EN 15353:2007, et/ou
e) au moins une, de préférence la totalité des couches de filtration fine, sont électrostatiquement chargées.

8. Sac filtrant pour aspirateur selon l'une des revendications 6 à 8, **caractérisé en ce que**
a) au moins une, de préférence chaque couche de capacité est un non-tissé, qui comprend un matériau recyclé sous forme fibreuse et/ou pulvérulente provenant de la fabrication de textiles, en particulier de textiles à base de coton ou de linters de coton, chaque couche de capacité présentant de préférence un grammage de 5 à 200 g/m², plus préférentiellement de 10 à 150 g/m², plus préférentiellement de 20 à 100 g/m², en particulier de 30 à 50 g/m²,
b) le matériau perméable à l'air comprend 1 à 5 couches de capacité, et/ou
c) en présence d'au moins deux couches de capacité, le grammage total de la somme de toutes les couches de capacité est de 10 à 300 g/m², de préférence de 15 à 200 g/m², plus préférentiellement de 20 à 100 g/m², en particulier de 50 à 90 g/m²,

9. Sac filtrant pour aspirateur selon l'une des revendications 6 à 9, **caractérisé en ce que** le matériau perméable à l'air a une structure multicouche comprenant la séquence de couches suivante, dans l'ordre à partir de l'espace intérieur du sac filtrant pour aspirateur :
une couche support, au moins une, de préférence au moins deux couches de capacité, de préférence une couche support supplémentaire, au moins une, de préférence au moins deux couches de filtration fine, ainsi qu'une couche support supplémentaire.

10. Sac filtrant pour aspirateur selon l'une des revendications précédentes, **caractérisé en ce que**
le sac filtrant pour aspirateur présente une plaque de maintien encadrant l'ouverture d'entrée, qui est formée d'un ou plusieurs plastiques recyclés, ou comprend un ou plusieurs plastiques recyclés, selon la norme DIN EN 15347:2007,
et/ou
au moins un répartiteur de flux et/ou au moins un diffuseur sont disposés dans l'espace intérieur, de préférence l'au moins un répartiteur de flux et/ou l'au moins un diffuseur étant formés d'un plastique recyclé ou de plusieurs plastiques recyclés, selon la norme DIN EN 15347:2007, ou d'une nappe de fibres, qui comprend un matériau recyclé sous forme fibreuse et/ou pulvérulente, provenant de la fabrication de textiles, en particulier de textiles à base de coton et/ou de linters de coton.

11. Sac filtrant pour aspirateur selon l'une des revendications précédentes, **caractérisé en ce que** le plastique recyclé est choisi, selon la norme DIN EN 15347:2007, dans le groupe consistant en les polyesters recyclés, en particulier le poly(téréphtalate d'éthylène) recyclé (rPET), selon la norme DIN EN 15353:2007, le poly(téréphtalate de butylène) recyclé (rPBT), le poly(acide lactique) recyclé (rPLA), le polyglycolide recyclé et/ou la polycaprolactone recyclée ; les polyoléfines recyclées, en particulier le polypropylène recyclé (rPP selon la norme DIN EN 15345:2008), le polyéthylène recyclé selon la norme DIN EN 15344:2008) et/ou le polystyrène recyclé (rPS selon la norme DIN EN 13342:2008) ; le poly(chlorure de vinyle) recyclé (rPVC selon la norme DIN EN 15346:2015), les polyamides recyclés, ainsi que les mélanges et combinaisons de ceux-ci.

12. Sac filtrant pour aspirateur selon l'une des revendications précédentes, **caractérisé en ce que** la proportion pondérale de la totalité des matériaux recyclés et/ou des linters de coton, par rapport au poids total du sac filtrant pour aspirateur, est d'au moins 25 %, de préférence d'au moins 30 %, plus préférentiellement d'au moins 40 %, plus préférentiellement d'au moins 50 %, plus préférentiellement d'au moins 60 %, plus préférentiellement d'au moins 70 %, plus préférentiellement d'au moins 80 %, plus préférentiellement d'au moins 90 %, en particulier d'au moins 95 %.

13. Sac filtrant pour aspirateur selon l'une des revendications précédentes, sous forme d'un sac à fond plat, d'un sac à soufflet ou d'un sac 3D.
